# EUROPÄISCHE PATENTSCHRIFT

(11) **EP 3 609 770 B1**
(45) Veröffentlichungstag und Bekanntmachung des Hinweises auf die Patenterteilung: **27.01.2021**
(21) Anmeldenummer: 18717312.5
(22) Anmeldetag: 06.04.2018
(51) Int. Cl.: B62D 1/19

(54) **LENKSÄULE MIT ENERGIEABSORPTIONSVORRICHTUNG FÜR EIN KRAFTFAHRZEUG**
STEERING COLUMN COMPRISING AN ENERGY ABSORPTION DEVICE FOR A MOTOR VEHICLE
COLONNE DE DIRECTION COMPRENANT UN DISPOSITIF D'ABSORPTION D'ÉNERGIE POUR UN VÉHICULE À MOTEUR

(30) Priorität: 12.04.2017 DE 102017206277
(43) Veröffentlichungstag der Anmeldung: 19.02.2020
(73) Patentinhaber: thyssenkrupp Presta AG, 9492 Eschen (LI); thyssenkrupp AG, 45143 Essen (DE)
(72) Erfinder: DOMIG, Markus, 6781 Bartholomäberg (AT)
(74) Vertreter: thyssenkrupp Intellectual Property GmbH
(86) Internationale Anmeldenummer: PCT/EP2018/058893
(87) Internationale Veröffentlichungsnummer: WO 2018/189055

(56) Entgegenhaltungen:
- WO-A1-2018/029076
- DE-A1-102012 109 079
- DE-B3-102008 034 807

## Beschreibung

Die Erfindung betrifft eine Lenksäule für ein Kraftfahrzeug, mit einem inneren Mantelrohr, das eine Lenkwelle drehbar lagert, und einer äußeren Manteleinheit, in der das innere Mantelrohr in Axialrichtung verschiebbar aufgenommen und fixierbar ist, mit einer wirkungsmäßig zwischen dem Mantelrohr und der Manteleinheit angeordneten Energieabsorptionsvorrichtung, in der ein Teil der im Crashfall auftretenden Energie absorbierbar ist, wenn das Mantelrohr gegenüber der Manteleinheit teleskopisch verschoben wird, wobei die Energieabsorptionsvorrichtung mindestens ein mit dem Mantelrohr gekoppeltes Deformationselement aufweist, wobei das Deformationselement über eine Zahnplatte mit der äußeren Manteleinheit gekoppelt ist, wobei zur Kopplung der Zahnplatte mit der Manteleinheit ein mit Zähnen versehenes Arretierelement mit der Manteleinheit verbunden ist und über eine Zuspannvorrichtung mit der Zahnplatte in Eingriff bringbar ist, um die Zahnplatte im zugespannten Zustand im Fahrbetrieb an die Manteleinheit zu koppeln, und im gelösten Zustand der Zuspannvorrichtung das Arretierelement außer Eingriff mit der Zahnplatte ist, wobei die Manteleinheit mindestens ein Begrenzungselement zur Begrenzung der Bewegung der Zahnplatte in Axialrichtung zur Fahrzeugfront hin aufweist, wobei eine vordere Stirnseite der Zahnplatte mit dem Begrenzungselement in Kontakt bringbar ist.

Die Lenksäule kann ein mit Zähnen versehenes Arretierelement aufweisen, welches mit der äußeren Manteleinheit verbunden ist und über eine Zuspannvorrichtung gegen die Zahnplatte andrückbar ist, um die Zahnplatte im Fahrbetrieb an die Manteleinheit zu koppeln. Um die Verstellung der Lenksäule zu ermöglichen, kann das Arretierelement, welches das Mantelrohr an der Manteleinheit arretiert, außer Eingriff mit der Zahnplatte gebracht werden, um das Mantelrohr gegenüber der Manteleinheit in Axialrichtung zu verschieben und somit eine Verstellung des Lenkrads gemäß den Bedürfnissen des Fahrers zu ermöglichen.

Aus der DE 10 2008 034 807 B1 ist eine derartige verstellbare Lenksäule mit Energieabsorptionsvorrichtung für ein Kraftfahrzeug bekannt. Die bekannte Lösung hat den Nachteil, dass bei gelöster Zuspannvorrichtung oder im Falle, dass aufgrund erhöhten Verschleißes das Arretierelement die Zahnplatte unter den im Crashfall auftretenden extremen Kräften nicht mehr sicher zu arretieren vermag, in der Energieabsorptionsvorrichtung auch keine Energie absorbiert wird, denn die Zahnplatte bewegt sich dann einfach zusammen mit dem Mantelrohr in Axialrichtung. Energie kann aber nur absorbiert werden, wenn sich das Mantelrohr mit dem Deformationsstreifen bewegt und die Zahnplatte arretiert ist.

Eine Lenksäule mit den eingangs genannten Merkmalen ist beispielsweise aus der DE 10 2012 109 079 A1 bekannt. Diese Schrift offenbart die Merkmale des Oberbegriffs des Anspruchs 1. Diese setzt eine zugespannte und einwandfrei arbeitende Zuspannvorrichtung zur Absorption von Energie im Crashfall in der Energieabsorptionsvorrichtung voraus.

Aufgabe der Erfindung ist es, eine Lenksäule der eingangs genannten Art zu verbessern, so dass auch bei geöffneter oder ungenügend zuspannender Zuspannvorrichtung ein Teil der im Crashfall auftretenden Energie in der Energieabsorptionsvorrichtung absorbiert wird.

Die erfindungsgemäße Lösung sieht vor, dass im gelösten Zustand der Zuspannvorrichtung, wenn im Crashfall das Mantelrohr auf Grund der in die Lenkwelle eingetragenen Kraft weiter nach vorn gedrückt wird und die Stirnseite der Zahnplatte mit dem Begrenzungselement in Kontakt kommt, die Energieabsorptionsvorrichtung einen Teil der im Crashfall auftretenden Energie absorbieren kann.

Die erfindungsgemäße Lenksäule weist zur Kopplung der Zahnplatte mit der äußeren Manteleinheit ein mit Zähnen versehenes Arretierelement auf, welches mit der äußeren Manteleinheit verbunden ist und über eine Zuspannvorrichtung mit der Zahnplatte in Eingriff bringbar ist, um die Zahnplatte im Fahrbetrieb an die Manteleinheit zu koppeln.

Wird bei der erfindungsgemäßen Lenksäule die Zuspannvorrichtung nicht betätigt oder versagt diese infolge erhöhten Verschleißes, so bewegt sich im Crashfall zwar zuerst das Mantelrohr zusammen mit der Zahnplatte in Axialrichtung nach vorn, d.h. in Richtung Fahrzeugfront, jedoch nur bis zu einem Punkt, wo die Stirnseite der Zahnplatte in Kontakt mit dem Begrenzungselement der Manteleinheit kommt. Ab diesem Punkt kann sich die Zahnplatte nicht weiter in Axialrichtung nach vorn bewegen. Somit wird im weiteren Verlauf des Crashfalls das Mantelrohr auf Grund der in die Lenkwelle eingetragenen Kraft weiter nach vorn gedrückt, so kommt es zu einer Relativbewegung zwischen der an dem Begrenzungselement fixierten Zahnplatte und dem sich weiterbewegenden Mantelrohr, so dass die Energieabsorptionsvorrichtung einen Teil der im Crashfall auftretenden Energie absorbieren kann.

In einer vorteilhaften Weiterbildung kann es vorgesehen sein, dass das Begrenzungselement als Anschlagschulter ausgebildet ist. Die Anschlagschulter ist als Anschlagkörper mit einer Anschlagfläche ausgebildet. Die Anschlagfläche ist bevorzugt orthogonal zur Axialrichtung ausgebildet.

Vorzugsweise ist die Anschlagschulter und die Manteleinheit einstückig ausgestaltet. Durch diese Maßnahme braucht es keine gesonderte Fertigung der Anschlagschulter und keine Montage derselben an der Manteleinheit, so dass Fertigungskosten reduziert werden. Weiter ist die Anschlagschulter mit Vorteil einstückig in die Manteleinheit eingeformt.

Diese Ausführungsform ist besonders einfach durch ein Stanz-Umform-Prozess herstellbar, welches die Anschlagschulter in eine Wand der vorzugsweise aus einem Blechstanzteil bestehenden Manteleinheit einformt.

In einer ersten Variante der Erfindung ist das als Anschlagschulter ausgebildete Begrenzungselement mit Vorteil in Form zweier, quer zur Axialrichtung übereinander liegend angeordneten und radial nach innen ragenden Ausstülpungen der Manteleinheit ausgestaltet. Die Position und der Abstand zwischen den beiden Ausstülpungen ist dabei auf die Position und Erstreckung der Stirnseite der Zahnplatte abgestimmt, wobei die räumliche Ausdehnung der Ausstülpungen relativ gering bleibt, was wiederum eine hohe Steifigkeit der Anschlagschulter zur Folge hat.

In einer anderen vorteilhaften Ausführungsform ist die Anschlagschulter als eine sich quer zur Axialrichtung erstreckende Ausstülpungen der Manteleinheit ausgestaltet. Bei dieser Ausführungsform muss nur eine einzige Ausstülpung in die Manteleinheit eingeformt werden.

In einer weiteren vorteilhaften Ausführungsform ist das Begrenzungselement als Auflauframpe ausgebildet. Die Auflauframpe steigt in Axialrichtung an, wobei die Auflauframpe in Richtung zur Fahrzeugfront hin ansteigt.

Durch die Ausgestaltung des Begrenzungselements als Auflauframpe, die die Bewegung der Zahnplatte begrenzt, ist es zum einen möglich, die Zahnplatte mit einer geringeren negativen Beschleunigung abzubremsen, wenn diese an der Auflauframpe anschlägt, wodurch wirkende Kraftspitzen vermieden oder zumindest reduziert werden werden. Weiterhin kann eine definierte Deformation der Auflauframpe durch die Zahnplatte vorgesehen sein, um zumindest einen Teil der wirkenden Energie im Crashfall zu absorbieren. Ist die Zahnplatte zum Stillstand gekommen, d.h. es findet keine Relativbewegung zwischen der Zahnplatte und der äußeren Manteleinheit statt, so wird im weiteren Verlauf des Crashfalls das Mantelrohr auf Grund der in die Lenkwelle eingetragenen Kraft weiter nach vorn gedrückt und es kommt zu einer Relativbewegung zwischen der an der Auflauframpe fixierten Zahnplatte und dem sich weiterbewegenden Mantelrohr, so dass die Energieabsorptionsvorrichtung einen Teil der im Crashfall auftretenden Energie absorbieren kann.

Bevorzugt ist die Auflauframpe und die Manteleinheit einstückig gebildet. Dies bietet den Vorteil einer einfachen und rationalen Fertigung.

Bevorzugt weist die Auflauframpe eine Steigung mit einem Winkel zwischen 10° und 45° auf. Dadurch kann erreicht werden, dass die Zahnplatte 28 sicher in ihrer Bewegung begrenzt wird. Der Winkel der Steigung wird zwischen der Auflauframpe und Axialrichtung bestimmt.

Bevorzugt ist das Deformationselement als Deformationsstreifen ausgebildet ist, wobei die Zahnplatte ein Bremselement umfasst, welches den Deformationsstreifen umgreift.

In weiterer vorteilhafter Ausgestaltung ist der Deformationsstreifen mittels Nietverbindungen am Mantelrohr befestigt. Diese Maßnahme gewährleistet eine hohe Belastbarkeit der Verbindung zwischen dem Deformationsstreifen und dem Mantelrohr bei hohen axialen Kräften im Crashfall.

Alternativ kann es vorgesehen sein, dass das Deformationselement als Biegedraht ausgebildet ist, wobei die Zahnplatte mit dem Biegedraht gekoppelt ist. Der Biegedraht kann auch als Biege-Reiß-Lasche ausgebildet sein.

Ausführungsbeispiele der Erfindung werden nachfolgend anhand der Zeichnungen näher erläutert. Die Figuren zeigen im Einzelnen:
- Figur 1:: in perspektivischer Ansicht eine Lenksäule für ein Kraftfahrzeug mit Energieabsorptionsvorrichtung und erfindungsgemäßer Manteleinheit;
- Figur 2:: die Lenksäule von Figur 1 mit demontierter Zuspannvorrichtung;
- Figur 3:: eine Seitenansicht der Lenksäule von Figur 1;
- Figur 4:: eine gemäß Linie B-B von Figur 3 geschnittene Ansicht derselben Lenksäule;
- Figur 5:: ein vergrößertes Detail aus Figur 4;
- Figur 6:: ein Mantelrohr mit teilweise demontierter Energieabsorptionsvorrichtung mit einem Deformationsstreifen in perspektivischer Darstellung;
- Figur 7:: eine perspektivische Teildarstellung einer erfindungsgemäßen Lenksäule von einer der Fahrzeugfront zugewandten Seite her gesehen;
- Figur 7a:: einen Längsschnitt gemäß Linie C-C von Figur 4 einer erfindungsgemäßen Lenksäule durch die Zahnplatte;
- Figur 8:: einen Längsschnitt gemäß Linie A-A von Figur 3 einer erfindungsgemäßen Lenksäule mit einem aus der Manteleinheit im Bereich der Axialverstellung positionierten Mantelrohr;
- Figur 9:: wie Figur 8, jedoch in einer Axialposition des Mantelrohrs, bei dem die Stirnseite der Zahnplatte an der Anschlagschulter der Manteleinheit anschlägt;
- Figur 10:: wie Figur 9, jedoch mit einem in Axialrichtung noch weiter nach links verschobenen Mantelrohr während des Crashfalls;
- Figur 11:: eine vergrößerte Detaildarstellung ähnlich Figur 5 einer zweiten Ausführungsform der Erfindung;
- Figur 12:: schematisierte Darstellung des als Anschlagschulter ausgebildeten Begrenzungselements und der Zahnplatte vor dem Anschlagen;
- Figur 13:: schematisierte Darstellung des als Anschlagschulter ausgebildeten Begrenzungselements und der Zahnplatte nach dem Anschlagen;
- Figur 14:: schematisierte Darstellung des als Auflauframpe ausgebildeten Begrenzungselements und der Zahnplatte vor dem Anschlagen;
- Figur 15:: schematisierte Darstellung des als Auflauframpe ausgebildeten Begrenzungselements und der Zahnplatte nach dem Anschlagen;
- Figur 16:: ein Mantelrohr mit teilweise demontierter Energieabsorptionsvorrichtung mit einem Biegedraht in perspektivischer Darstellung.

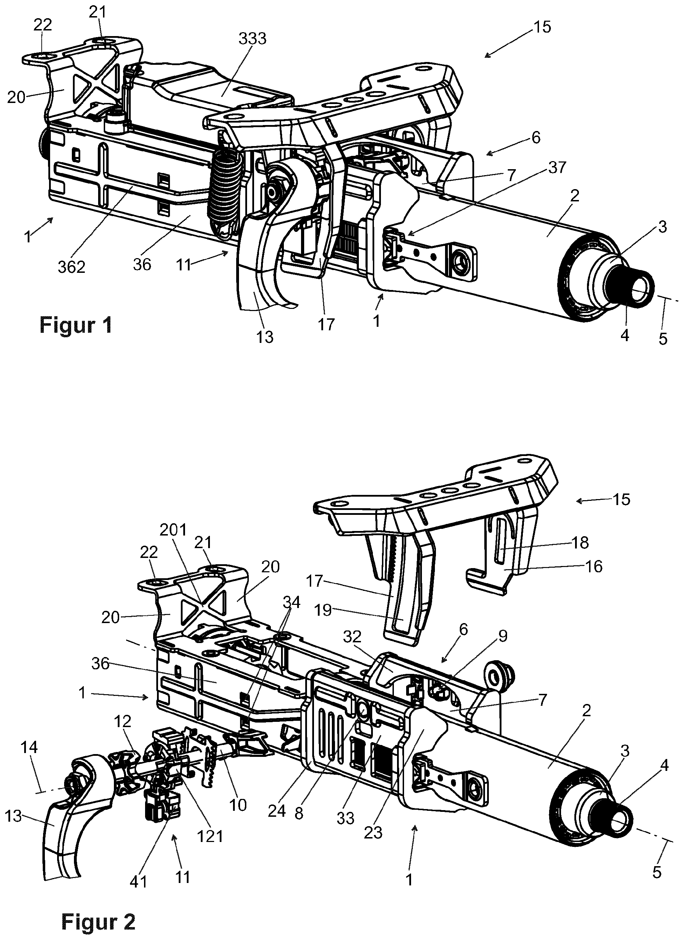

In den Figuren 1 und 2 erkennt man eine erfindungsgemäße Lenksäule mit einer Manteleinheit 1, in der ein Mantelrohr 2 aufgenommen ist. Im Mantelrohr 2 ist eine Lenkwelle 3 drehbar gelagert. An einem hinteren Endbereich 4 der Lenkwelle 3 kann ein nicht gezeigtes Lenkrad befestigt werden. Um das Lenkrad in Richtung der Drehachse 5 der Lenkwelle 3 verschiebbar zu machen, ist das Mantelrohr 2 in der Manteleinheit 1 längs verschiebbar angeordnet. Um das Mantelrohr 2 nach dem Verstellen zu fixieren, umfasst die Manteleinheit 1 einen Klemmabschnitt 6. Der Klemmabschnitt 6 umschließt das Mantelrohr 2 mit Ausnahme eines Längsspaltes 7 auf ihrer Oberseite. Der Klemmabschnitt 6 weist zwei gegenüberliegende Durchgangsöffnung 8, 9 auf, durch die ein Klemmbolzen 10 einer Zuspannvorrichtung 11 hindurchragt. Die Zuspannvorrichtung 11 ist mit einer ersten Hubscheibe 12 versehen, die mit einem Bedienhebel 13 drehfest verbunden ist.

Wird der Bedienhebel 13 um die Achse 14 des Klemmbolzens 10 verschränkt, so fahren zwei Hubscheiben 12, 121 in Richtung der Achse 14 auseinander, wobei der Klemmabschnitt 6 über den Klemmbolzen 10 zusammengezogen wird, so dass sich der Längsspalt 7 verkleinert und schließlich das Mantelrohr 2 in dem Klemmabschnitt 6 eingeklemmt und damit fixiert wird, so dass eine Verschiebung des Mantelrohrs 2 in Richtung der Drehachse 5 der Lenkwelle 3 (=Axialrichtung 25) im normalen Betriebszustand der Lenksäule nicht mehr möglich ist. Die erste Hubscheibe 12 weist eine Nockenkontur auf, die mit einer Kurvengeometrie der zweiten Hubscheibe 121 zusammenwirkt, wobei bei einer Verdrehung des Bedienhebels 13 um die Achse 14 sich die erste Hubscheibe 12 gegenüber der zweiten Hubscheibe 121 verdreht. Durch dieses Verdrehen der Hubscheiben 12, 121 zueinander wird ein Klemmhub in Richtung der Achse 14 bereitgestellt, der das Mantelrohr 2 und die Manteleinheit 1 miteinander verspannt. Die zweite Hubscheibe 121 umfasst ein Arretierelement 41 mit Zähnen, welches zusammen mit der zweiten Hubscheibe in Richtung der Achse 14 verschoben wird und somit in Eingriff mit der Verzahnung der Zahnplatte 28 bringbar ist.

Außerdem wirkt die Zuspannvorrichtung 11 mit einem Halter 15 zusammen, der mit dem nicht gezeigten Fahrzeug fest verbindbar ist. Der Halter 15 besitzt zwei Klemmbacken 16, 17, die nach unten ragen und jeweils mit einem Längsschlitz 18, 19 versehen sind. Dies erkennt man am besten in Figur 2. In dem in Figur 1 gezeigten eingebauten Zustand ragt der Klemmbolzen 10 der Zuspannvorrichtung 11 auch durch die beiden Längsschlitze 18, 19 der Klemmbacken 16, 17 des Halters 15. Aufgrund der Ausdehnung der Längsschlitze 18, 19 kann der Klemmbolzen 10 über einen gewissen Bereich nach oben oder nach unten geschoben werden. Da der Klemmbolzen 10 auch in den Durchgangsöffnung 8, 9 des Klemmabschnitt 6 steckt, wird zusammen mit dem Klemmbolzen 10 auch der Klemmabschnitt 6 nach oben oder nach unten bewegt. Somit dienen die Längsschlitze 18, 19 zur Ermöglichung einer Höhenverstellung, so dass die Manteleinheit 1 und das Mantelrohr 2 gegenüber dem Halter 15 verschwenkbar sind.

Die Manteleinheit 1 ist an ihrem vorderen Ende (Fahrzeugfront) mit einem Halterabschnitt 20 versehen, der als Blechstanzteil ausgestaltet ist. Der Halterabschnitt 20 weist zwei Befestigungsöffnungen 21, 22 auf, die zum Durchgang von nicht gezeigten Befestigungsschrauben bestimmt sind, mit denen der Halterabschnitt 20 an der nicht gezeigten Karosserie des Fahrzeugs befestigbar ist. Da das Blech des Halterabschnitts 20 elastischen ist, kann die Manteleinheit 1 innerhalb des durch die Längsschlitze 18, 19 der Klemmbacken 17 begrenzten Bereichs nach oben oder unten bewegt werden, wobei die Manteleinheit 1 verschwenkt und der Halterabschnitt 20 elastisch verformt wird. Der Halterabschnitt 20 umfasst ein Strebenkreuz 201, welches eine elastische Verformung des Halterabschnitts 20 zur Verschwenkung der Manteleinheit 1 gewährleistet, jedoch in andere Verformungsrichtungen eine höhere Steifigkeit bereitstellt. Diese Verschwenkung der Manteleinheit 1 bewirkt eine Höhenverstellung des nicht gezeigten Lenkrades.

Soll die Lenksäule in einer vorgewählten Höhe fixiert werden, so wird dies durch dieselbe Zuspannvorrichtung 11 bewirkt, die auch das Mantelrohr 2 gegen unbeabsichtigte Verschiebungen in Richtung der Drehachse 5 der Lenkwelle 3 fixiert. Wird der Bedienhebel 13 in Zuspannrichtung geschwenkt, so klemmt die Zuspannvorrichtung 11 die Manteleinheit 1 an den Klemmbacken 16, 17 fest, so dass eine unbeabsichtigte Bewegung der Lenksäule nach oben oder unten verhindert wird.

Der Klemmabschnitt 6 weist zwei Kontaktplatten 23, 24 auf, die jeweils mit einer zentralen Ausnehmung für den Durchgang des Mantelrohrs 2 ausgestattet sind. Dabei ist die Plattenebene orthogonal zur Drehachse 5 der Lenkwelle 3 ausgerichtet. Das in den Ausnehmungen aufgenommene Mantelrohr 2 kann in den Kontaktplatten 23, 24 festgeklemmt werden. Die beiden Kontaktplatten 23, 24 sind mit einem zweiteiligen Verbindungsblech 32, 33 verbunden. Die beiden Teile des Verbindungsblechs 32, 33 sind als Stanz-Biegeteile ausgestaltet und mit den Kontaktplatten 23, 24. mittels Laserschweißen verschweißt. Die Verbindungsbleche 32, 33 umschließen zusammen mit den Kontakplatten 23, 24 das Mantelrohr 2 im wesentlichen U-förmig, also nicht vollständig, wobei an der Oberseite ein Längsspalt 7 verbleibt, dessen Breite durch das Zuspannen der Zuspannvorrichtung 11 verkleinert werden kann, um das Mantelrohr 2 in dem Klemmabschnitt 6 einzuklemmen. Die Verbindungsbleche 32, 33 haben zum Durchgang des Klemmbolzens 10 der Zuspannvorrichtung 11 jeweils eine Durchgangsöffnung 8, 9. Der Klemmabschnitt 6 ist an seiner vorderen Stirnseite mit einem kastenförmigem U-Profil 36 verschweißt, auf dessen Oberseite der Halterabschnitt 20 befestigt ist. Weiterhin umfasst der Halterabschnitt 20 Gewindebohrungen, welche zur Anbringung eines in Figur 1 erkennbaren elektromechanischen Lenkradschlosses 333, auch elektrische Lenkradverriegelung genannt, an der Manteleinheit 1 vorgesehen ist. Das Kasten förmige U-Profil 36 umfasst zwei Schenkelabschnitte, die sich parallel zueinander erstrecken. Jeder Schenkelabschnitt umfasst eine Steifigkeitssicke 362. Durch die Steifigkeitssicken 362 ist es möglich, auch mit einer geringen Materialstärke des U-Profils 36 eine verbindungssteife und robuste Manteleinheit 1 bereitzustellen.

Außerdem ist die Lenksäule mit einer Energieabsorptionsvorrichtung 37 versehen, die sowohl mit der Manteleinheit 1 als auch mit dem Mantelrohr 2 verbunden ist und im Crashfall beim Auftreten besonders starker Kräfte eine Verschiebung des Mantelrohrs 2 gegenüber der Manteleinheit 1 unter Absorption der hierfür aufzuwendenden Energie ermöglicht. Um Raum für die Unterbringung der Energieabsorptionsvorrichtung 37 zu schaffen, sind die Kontaktplatten 23, 24 jeweils mit einer seitlichen Ausbuchtung versehen. Die in den Figuren 1 bis 11 dargestellte Energieabsorptionsvorrichtung 37 umfasst einen Deformationsstreifen 26, der mit dem Mantelrohr 2 fest verbunden ist, wobei die Schmalseite des Deformationsstreifen 26 von einem Bremselement 27 der Zahnplatte 28 umgriffen ist.

Wenn im Crashfall das Mantelrohr 2 in Axialrichtung 25 in Richtung auf die Fahrzeugfront zu gegenüber der Zahnplatte 28 verschoben wird, so nimmt es den Deformationsstreifen 26 mit. Dabei wird der Deformationsstreifen 26 durch das Bremselement 27 gezogen, welches den Deformationsstreifen 26 verformt. Der Deformationsstreifen 26 nimmt dabei die durch die Verschiebung des Mantelrohrs 2 eingeleitete Energie zumindest teilweise auf.

Die Figuren 1 und 2 zeigen wie die Zahnplatte 28 mit der an der äußeren Manteleinheit 1 angeordneten Zuspannvorrichtung 11 zusammenwirkt. Ist die Zuspannvorrichtung 11 gelöst, so kann das Mantelrohr 2 zusammen mit der Zahnplatte 28 in Axialrichtung 25 gegenüber der Manteleinheit 1 frei verschoben werden, um die Position des nicht gezeigten Lenkrads an die Bedürfnisse des Fahrers anzupassen.

Für das Lösen und Zuspannen der Zuspannvorrichtung 11 ist der Bedienhebel 13 vorgesehen. Im gelösten Zustand der Zuspannvorrichtung 11 ist ein mit einer Verzahnung versehenes Arretierelement 41 außer Eingriff mit der Zahnplatte 28, so dass diese in Axialrichtung 25 leicht verschiebbar ist. Wird die Zuspannvorrichtung 11 zugespannt, so wird das Arretierelement 41 mit seiner Verzahnung gegen die Verzahnung der Zahnplatte 28 gedrückt und in Eingriff miteinander gebracht. Da das Arretierelement 41 in der äußeren Manteleinheit 1 axial unverschiebbar gelagert ist, kann die Zahnplatte 28 im zugespannten Zustand der Zuspannvorrichtung 11 nicht mehr relativ zur Manteleinheit 1 in Axialrichtung 25 verschoben werden. Die Zahnplatte 28 ist daher starr mit der Manteleinheit 1 verbunden. Treten im Crashfall besonders starker Kräfte in Axialrichtung 25 auf, so kann das Mantelrohr 2 bei zugespannter Zuspannvorrichtung 11 in Axialrichtung 25 nur noch relativ zur unverschieblichen Zahnplatte 28 bewegt werden, wodurch der Deformationsstreifen 26 durch das Bremselement 27 gezogen wird und dadurch der Axialbewegung des Mantelrohrs 2 einen großen Widerstand entgegensetzt. Dabei wird die durch die Bewegung des Mantelrohrs 2 eingebrachte Energie in der Energieabsorptionsvorrichtung 37 absorbiert.

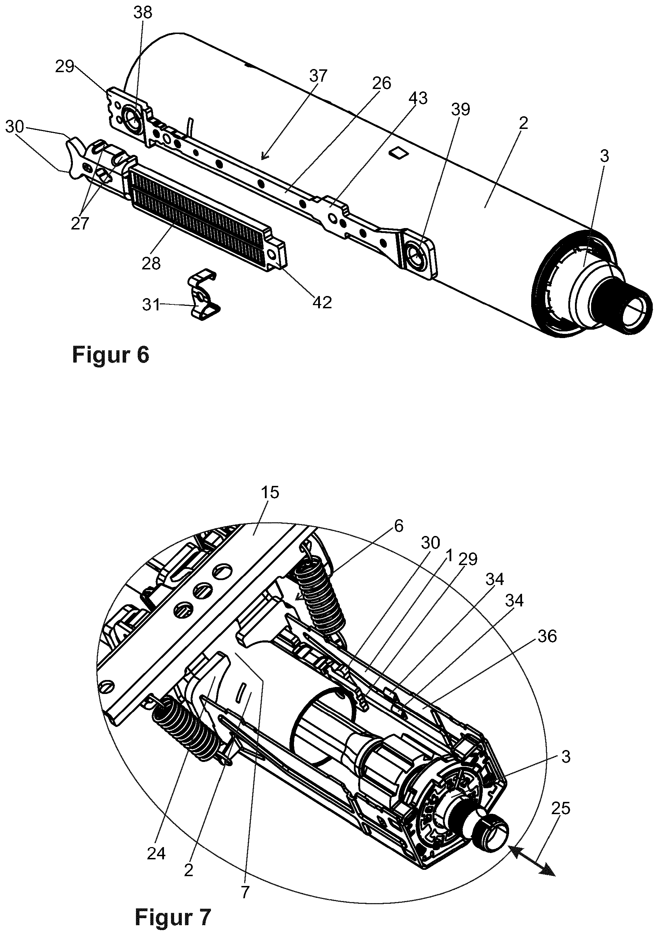

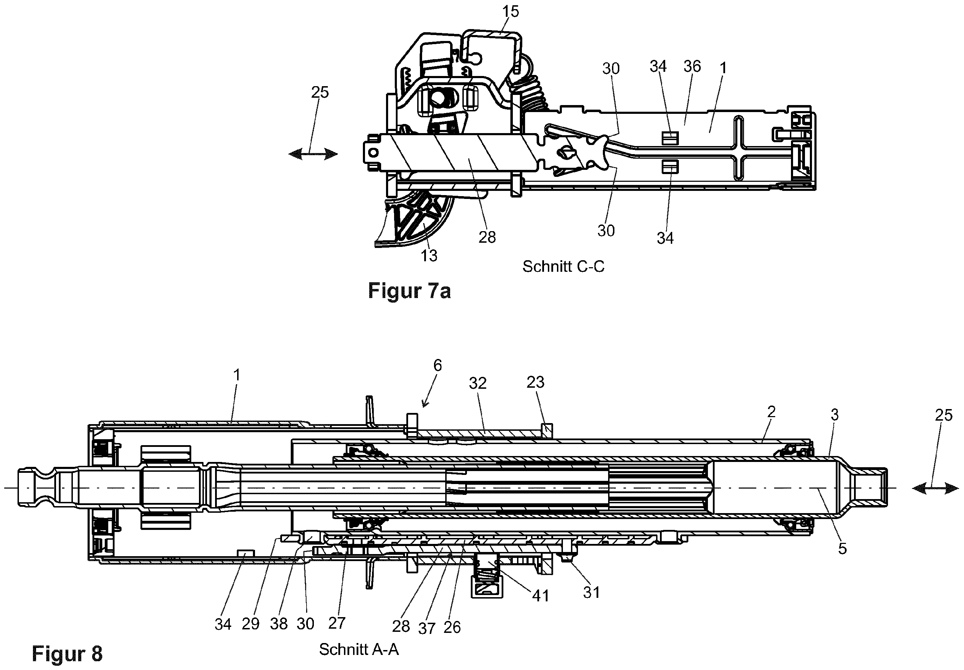

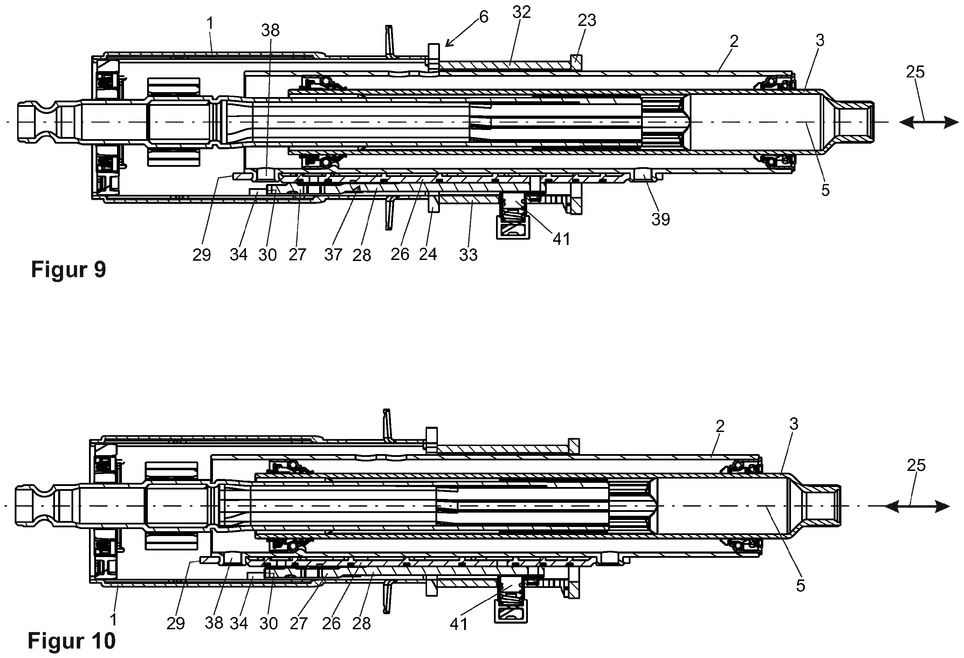

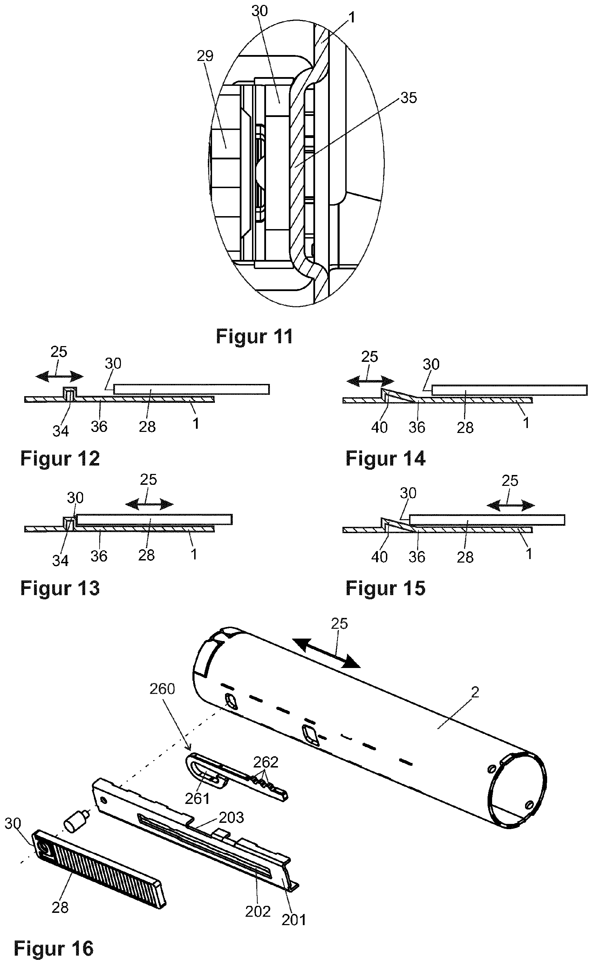

Wenn die Zuspannvorrichtung 11 im Fahrbetrieb versehentlich nicht zugespannt wurde oder in Folge erhöhten Materialverschleißes das Arretierelement 41 über die durch hohe Axialkräfte im Crashfall verschobene Zahnplatte 28 rutscht, kommt das erfindungsgemäße Begrenzungselement 34, 35, 40 ins Spiel. In den Figuren 1 bis 13 ist das Begrenzungselement als Anschlagschulter 34, 35 ausgebildet. In den Figuren 14 und 15 ist das Begrenzungselement als Auflauframpe 40 ausgebildet. Figur 7, 7a und 8 zeigen die Ausgangssituation, bei der das Mantelrohr 2 innerhalb des zulässigen axialen Verstellbereichs eine mittlere Stellung einnimmt. Wenn nun im Crashfall durch den Fahrer über das nicht gezeigten Lenkrad große Kräfte in Axialrichtung 25 auf die Lenkwelle 3 und damit auf das Mantelrohr 2 einwirken, so wird das Mantelrohr 2 in Axialrichtung 25 in Richtung der Fahrzeugfront verschoben, bis eine vordere Stirnseite 30 der Zahnplatte 28 in Kontakt mit der doppelten Anschlagschulter 34 der Manteleinheit 1 kommt. Hier wird die Axialbewegung der Zahnplatte 28 gestoppt, wie dies in Figur 9 dargestellt ist. Wird nun das Mantelrohr 2, wie in Figur 10 gezeigt ist, weiter in Axialrichtung 25 gedrückt, so bewegt es sich relativ zur jetzt fixierten Zahnplatte 28, wodurch das Bremselement 27 über den Deformationsstreifen 26 rutscht und diesen verformt. Dabei wird ein Teil der im Crashfall auftretenden Energie in Verformungsenergie des Deformationsstreifens 26 verwandelt und somit in der erfindungsgemäßen Energieabsorptionsvorrichtung 37 absorbiert.

In Figur 11 sieht man eine zweite Ausführungsform des als Anschlagschulter ausgebildeten Begrenzungselements, bei der die Anschlagschulter 35 als längliche Ausstülpung der Manteleinheit 1 ausgebildet ist. Die Anschlagschulter 35 erstreckt sich hier über den gesamten Vertikalbereich der vorderen Stirnseite 30 der Zahnplatte 28, so dass diese an einer weiteren Axialbewegung gehindert ist.

Figuren 1 bis 10 zeigen eine erste Ausführungsform der Erfindung, bei der das Begrenzungselement als doppelte Anschlagschulter 34 in Form zweier vertikal übereinander angeordneter Ausstülpungen der Manteleinheit 1 ausgebildet ist, die als Vorsprünge in den Innenraum der Manteleinheit 1 hineinragen. Im genannten Crashfall kommen die beiden Ausstülpungen der doppelten Anschlagschulter 34 mit einem oberen und einem unteren Bereich der vorderen Stirnseite 30 der Zahnplatte 28 in Anlage und stoppen somit die weitere Axialbewegung der Zahnplatte 28 in Richtung der Fahrzeugfront.

Der Deformationsstreifen 26 ist mittels zweier Nietverbindungen 38, 39 sicher am Mantelrohr 2 befestigt. Die Nietverbindungen 38, 39 sind entsprechend stark dimensioniert, so dass der Deformationsstreifen 26 auch unter den im Crashfall auftretenden hohen Axialkräften stets sicher am Mantelrohr 2 befestigt bleibt.

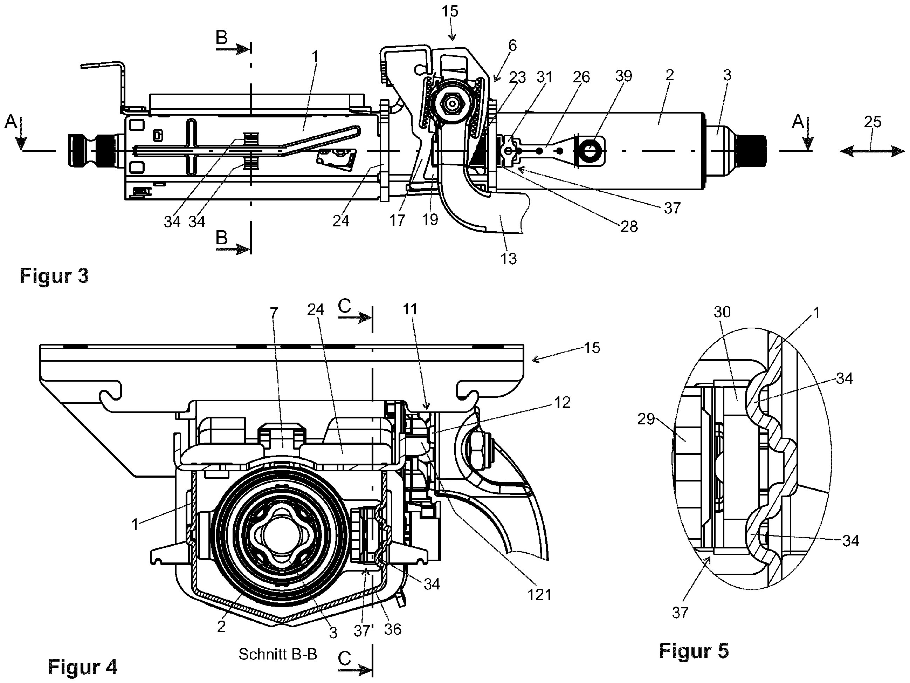

Wie man am besten in den Figuren 3 und 6 erkennt, ist ein hinteres Ende 42 der Zahnplatte 28 mittels eines Halteclips 31 an einem verbreiterten Abschnitt 43 des Deformationsstreifen 26 lösbar befestigt. Im Normalbetrieb sorgt der Halteclip 31 für eine sichere und klapperfreie Befestigung der Zahnplatte 28 am Deformationsstreifen 26. Wenn im Crashfall die Zahnplatte 28 an der Manteleinheit 1 fixiert ist und das Mantelrohr 2 zusammen mit dem Deformationsstreifen 26 in Axialrichtung 25 verschoben wird, rutscht der Halteclip 31 von dem verbreiterten Abschnitt 43 des Deformationsstreifen 26 herunter und löst sich, so dass der Deformationsstreifen 26 zusammen mit dem Mantelrohr 2 in Axialrichtung 25 weit über das hintere Ende 32 der Zahnplatte 28 hinaus verschoben werden kann.

Figur 12 und 13 zeigen eine schematisierte Darstellung des als Anschlagschulter 34 ausgebildeten Begrenzungselements, welches in der Seitenwand des U-Profils 36 der Manteleinheit 1 eingeformt ist, wobei die Zahnplatte 28 in der Figur 12 von der Anschlagschulter 34 beabstandet ist und in der Figur 13 bereits an der Anschlagschulter 34 angeschlagen ist, so dass eine weitere Verlagerung der Zahnplatte 28in Richtung der Fahrzeugfront verhindert ist.

Figur 14 und 15 zeigen eine schematisierte Darstellung des als Auflauframpe 40 ausgebildeten Begrenzungselements, die in der Seitenwand des U-Profils 36 der Manteleinheit 1 sickenförmig eingeformt ist und in den Innenraum der Manteleinheit 1 hineinragt. Die Auflauframpe 40 steigt in Axialrichtung 25 in Richtung auf die Fahrzeugfront zu an, d.h. die Auflauframpe ragt an ihrem fahrzeugfrontseitigen Ende weiter in den Innenraum der Manteleinheit 1 hinein. Figur 14 zeigt die Zahnplatte 28, die von der Auflauframpe 40 beabstandet ist und Figur 15 zeigt die auf die Auflauframpe 40 aufgelaufene und somit in ihrer Bewegung in Axialrichtung 25 auf die Fahrzeugfront zu gehinderte Zahnplatte 28.

Durch die Ausgestaltung des Begrenzungselements als Auflauframpe 40, die die Bewegung der Zahnplatte 28 begrenzt, ist es zum einen möglich, die Zahnplatte 28 mit einer geringeren negativen Beschleunigung abzubremsen, wodurch Kraftspitzen vermieden oder reduziert werden. Weiterhin kann eine definierte Deformation der Auflauframpe 40 durch die Zahnplatte 28 vorgesehen sein, um zumindest einen Teil der wirkenden Energie im Crashfall zu absorbieren. Ist die Zahnplatte 28 zum Stillstand gekommen, d.h. es findet keine Relativbewegung zwischen der Zahnplatte 28 und der äußeren Manteleinheit 1 statt, so wird im weiteren Verlauf des Crashfalls das Mantelrohr 2 auf Grund der in die Lenkwelle 3 eingetragenen Kraft weiter nach vorn gedrückt und es kommt zu einer Relativbewegung zwischen der durch die Auflauframpe 40 in ihrer Bewegung begrenzten Zahnplatte 28 und dem sich weiterbewegenden Mantelrohr 2, so dass die Energieabsorptionsvorrichtung einen Teil der im Crashfall auftretenden Energie absorbieren kann.

Bevorzugt weist die Auflauframpe 40 einen Steigung zwischen 10° und 45° auf. Dadurch kann erreicht werden, dass die Zahnplatte 28 sicher in ihrer Bewegung begrenzt wird.

Durch die Erfindung wird eine Lenksäule geschaffen, die im Crashfall auch bei gelöster oder unzureichend zugespannter Zuspannvorrichtung 11 die Absorption eines Teils der im Crashfall in die Lenksäule eingebrachten Energie in der Energieabsorptionsvorrichtung 37 gewährleistet. Dies wird durch das erfindungsgemäße Begrenzungselement 34, 35, 40 bewirkt, an der eine vordere Stirnseite 30 der Zahnplatte 28 anschlägt und damit die Zahnplatte 28 an der Manteleinheit 2 fixiert, d.h. die Bewegung der Zahnplatte 28 in Axialrichtung 25 in Richtung auf die Fahrzeugfront zu verhindert.

Die Erfindung ist nicht auf Lenksäulen beschränkt, bei der die Energieabsorptionsvorrichtung einen Deformationsstreifen aufweist. Vielmehr ist die erfindungsgemäße Lösung auch bei Lenksäulen anwendbar, deren Energieabsorptionsvorrichtungen beispielsweise Biegelaschen, Biegedrähte, Biegereißlaschen oder Verformungsorgane aufweist, welche Langlöcher aufweiten. Des Weiteren kann selbstverständlich auch mehr als ein Deformationsstreifen oder mehrere gleichwirkende Deformationselemente verwendet werden.

In der Figur 16 ist eine Energieabsorptionsvorrichtungen 37 in einer zweiten Ausführungsform dargestellt. Das Mantelrohr 2 ist fest mit einer Schiene 201 verbunden, welche U-förmig umgebogene Seitenwände aufweist, die am Mantelrohr 2 festgeschweißt sind. Dadurch entsteht ein streifenförmiger Hohlraum zwischen der Schiene 201 und dem Mantelrohr 2, in welchem ein Biegedraht 260 angeordnet ist. Die Schiene 201 ist in ihrem Mittelabschnitt mit einem längs über den größten Teil der Schiene 201 verlaufenden Schlitz 202 versehen, durch den hindurch ein Stift der Zahnplatte 28 in eine Öse 261 des Biegedrahts 261 eingreift. Die Öse 261 ist an einem kurzen Schenkel des Biegedrahts 260 angeordnet, welcher über einen U-förmig gebogenen Bereich, d.h. über einen zurückgebogenen Bereich, in einen langen Schenkel übergeht. Beide Schenkel sind parallel zur Axialrichtung 25 ausgerichtet. Der lange Schenkel ist über Vorsprünge 262 des Biegedrahts 260 in die Aussparung 203 des Seitenteils der Schiene 201 ein. Im Crashfall wird der Biegedraht 260 umgebogen, wenn es zu einer Relativbewegung zwischen der Zahnplatte 28 und dem Mantelrohr 2 kommt.

### BEZUGSZEICHENLISTE

- 1: Manteleinheit
- 2: Mantelrohr
- 3: Lenkwelle
- 4: Endbereich
- 5: Drehachse
- 6: Klemmabschnitt
- 7: Längsspalt
- 8: Durchgangsöffnung
- 9: Durchgangsöffnung
- 10: Klemmbolzen
- 11: Zuspannvorrichtung
- 12: erste Hubscheibe
- 121: zweite Hubscheibe
- 13: Bedienhebel
- 14: Achse
- 15: Halter
- 16: Klemmbacken
- 17: Klemmbacken
- 18: Längsschlitze
- 19: Längsschlitze
- 20: Halterabschnitt
- 201: Strebenkreuz
- 21: Befestigungsöffnung
- 22: Befestigungsöffnung
- 23: Kontaktplatte
- 24: Kontaktplatte
- 25: Axialrichtung
- 26: Deformationsstreifen
- 27: Bremselement
- 28: Zahnplatte
- 29: vordere Stirnseite
- 30: vordere Stirnseite
- 31: Halteclip
- 32: erstes Verbindungsblech
- 33: zweites Verbindungsblech
- 333: Lenkradschloss
- 34: Anschlagschulter
- 35: Anschlagschulter
- 36: U-Profil
- 362: Steifigkeitsicke
- 37: Energieabsorptionsvorrichtung
- 38: Nietverbindung
- 39: Nietverbindung
- 40: Anschlagschulter
- 41: Arretierelement
- 42: hinteres Ende
- 43: verbreiterter Abschnitt

## Patentansprüche

1. Lenksäule für ein Kraftfahrzeug, mit einem inneren Mantelrohr (2), das eine Lenkwelle (3) drehbar lagert, und einer äußeren Manteleinheit (1), in der das innere Mantelrohr (2) in Axialrichtung (25) verschiebbar aufgenommen und fixierbar ist, mit einer wirkungsmäßig zwischen dem Mantelrohr (2) und der Manteleinheit (1) angeordneten Energieabsorptionsvorrichtung (37), in der ein Teil der im Crashfall auftretenden Energie absorbierbar ist, wenn das Mantelrohr (2) gegenüber der Manteleinheit (1) teleskopisch verschoben wird, wobei die Energieabsorptionsvorrichtung (37) mindestens ein mit dem Mantelrohr (2) gekoppeltes Deformationselement (26, 260) aufweist, wobei das Deformationselement (26, 260) über eine Zahnplatte (28, 280) mit der äußeren Manteleinheit (1) koppelbar ist, wobei zur Kopplung der Zahnplatte (28, 280) mit der Manteleinheit (1) ein mit Zähnen versehenes Arretierelement (41) mit der Manteleinheit (1) verbunden ist und über eine Zuspannvorrichtung (11) mit der Zahnplatte (28, 280) in Eingriff bringbar ist, um die Zahnplatte (28, 280) im zugespannten Zustand im Fahrbetrieb an die Manteleinheit (1) zu koppeln,
und im gelösten Zustand der Zuspannvorrichtung (11) das Arretierelement (41) außer Eingriff mit der Zahnplatte (28) ist, wobei die Manteleinheit (1) mindestens ein Begrenzungselement (34, 35, 40) zur Begrenzung der Bewegung der Zahnplatte (28) in Axialrichtung (25) zur Fahrzeugfront hin aufweist, wobei eine vordere Stirnseite (30) der Zahnplatte (28) mit dem Begrenzungselement (34, 35, 40) in Kontakt bringbar ist, **dadurch gekennzeichnet, dass** im gelösten Zustand der Zuspannvorrichtung (11), wenn im Crashfall das Mantelrohr (2) auf Grund der in die Lenkwelle eingetragenen Kraft weiter nach vorn gedrückt wird und die Stirnseite (30) der Zahnplatte (28) mit dem Begrenzungselement (34, 35, 40) in Kontakt kommt, die Energieabsorptionsvorrichtung (37) einen Teil der im Crashfall auftretenden Energie absorbieren kann.

2. Lenksäule nach Anspruch 1, **dadurch gekennzeichnet, dass** das Begrenzungselement als Anschlagschulter (34, 35) ausgebildet ist.

3. Lenksäule nach Anspruch 2, **dadurch gekennzeichnet, dass** die Anschlagschulter (34, 35) und die Manteleinheit (1) einstückig ausgestaltet sind.

4. Lenksäule nach Anspruch 3, **dadurch gekennzeichnet, dass** die Anschlagschulter (34, 35) einstückig in die Manteleinheit (1) eingeformt ist.

5. Lenksäule nach einem der vorhergehenden Ansprüche, **dadurch gekennzeichnet, dass** die Anschlagschulter (34) in Form zweier, quer zur Axialrichtung (25) übereinander liegend angeordneten und nach innen ragenden Ausstülpungen der Manteleinheit (1) ausgestaltet ist.

6. Lenksäule nach einem der Ansprüche 2 bis 4, **dadurch gekennzeichnet, dass** die Anschlagschulter (35) als eine sich quer zur Axialrichtung (25) erstreckende und nach innen ragende Ausstülpung der Manteleinheit (1) ausgestaltet ist.

7. Lenksäule nach Anspruch 1, **dadurch gekennzeichnet, dass** das Begrenzungselement als Auflauframpe (40) ausgebildet ist.

8. Lenksäule nach Anspruch 7, **dadurch gekennzeichnet, dass** die Auflauframpe (40) und die Manteleinheit (1) einstückig ausgestaltet sind.

9. Lenksäule nach einem der vorhergehenden Ansprüche, **dadurch gekennzeichnet, dass** das Deformationselement als Deformationsstreifen (26) ausgebildet ist, wobei die Zahnplatte (28) ein Bremselement (27) umfasst, welches den Deformationsstreifen (26) umgreift.

10. Lenksäule nach einem der Ansprüche 1 bis 8, **dadurch gekennzeichnet, dass** das Deformationselement als Biegedraht (260) ausgebildet ist, wobei die Zahnplatte (28) mit dem Biegedraht (260) gekoppelt ist.

## Claims

1. Steering column for a motor vehicle, comprising an inner casing tube (2), which rotatably supports a steering shaft (3), and an outer casing unit (1), in which the inner casing tube (2) is accommodated such that it can be displaced in the axial direction (25) and can be fixed, and an energy absorption device (37), which is operatively arranged between the casing tube (2) and the casing unit (1) and in which part of the energy occurring during a crash can be absorbed when the casing tube (2) is telescopically displaced relative to the casing unit (1), wherein the energy absorption device (37) has at least one deformation element (26, 260) coupled to the casing tube (2), wherein the deformation element (26, 260) can be coupled to the outer casing unit (1) by means of a toothed plate (28, 280), wherein
a locking element (41) provided with teeth is connected to the casing unit (1) to couple the toothed plate (28, 280) to the casing unit (1) and can be brought into engagement with the toothed plate (28, 280) via a clamping device (11), in order to couple the toothed plate (28, 280) to the casing unit (1) in driving operation when in the clamped state and,
in the released state of the clamping device (11), the locking element (41) is out of engagement with the toothed plate (28), wherein the casing unit (1) has at least one limiting element (34, 35, 40) for limiting the movement of the toothed plate (28) towards the vehicle front in the axial direction (25), wherein a front end face (30) of the toothed plate (28) can be brought into contact with the limiting element (34, 35, 40), **characterized in that** in the released state of the clamping device (11), when the casing tube (2) is forced further forward in a crash on account of the force introduced into the steering column and the front face (30) of the toothed plate (28) comes into contact with the limiting element (34, 35, 40), the energy absorption device (37) is able to absorb some of the energy occurring in the crash.

2. Steering column according to Claim 1, **characterized in that** the limiting element is formed as a stop shoulder (34, 35).

3. Steering column according to Claim 2, **characterized in that** the stop shoulder (34, 35) and the casing unit (1) are designed in one piece.

4. Steering column according to Claim 3, **characterized in that** the stop shoulder (34, 35) is moulded in one piece into the casing unit (1).

5. Steering column according to one of the preceding claims, **characterized in that** the stop shoulder (34) is designed in the form of two inwardly projecting protuberances of the casing unit (1) arranged one above the other transversely with respect to the axial direction (25).

6. Steering column according to one of Claims 2 to 4, **characterized in that** the stop shoulder (35) is designed as a protuberance of the casing unit (1) projecting inward and extending transversely with respect to the axial direction (25).

7. Steering column according to Claim 1, **characterized in that** the limiting element is designed as a run-on ramp (40).

8. Steering column according to Claim 7, **characterized in that** the run-on-ramp (40) and the casing unit (1) are designed in one piece.

9. Steering column according to one of the preceding claims, **characterized in that** the deformation element is formed as a deformation strip (26), wherein the toothed plate (28) comprises a braking element (27) which engages around the deformation strip (26).

10. Steering column according to one Claims 1 to 8, **characterized in that** the deformation element is formed as a bending wire (260), wherein the toothed plate (28) is coupled to the bending wire (260).

## Revendications

1. Colonne de direction pour un véhicule automobile, comportant un tube d'enveloppe intérieur (2) qui supporte de manière rotative un arbre de direction (3), et une unité d'enveloppe extérieure (1) dans laquelle le tube d'enveloppe intérieur (2) est reçu de manière déplaçable dans la direction axiale (25) et peut être fixé, comportant un dispositif d'absorption d'énergie (37) disposé fonctionnellement entre le tube d'enveloppe (2) et l'unité d'enveloppe (1), dispositif dans lequel une partie de l'énergie se produisant en cas de collision peut être absorbée, quand le tube d'enveloppe (2) est déplacé de manière télescopique par rapport à l'unité d'enveloppe (1), dans laquelle le dispositif d'absorption d'énergie (37) comprend au moins un élément de déformation (26, 260) accouplé au tube d'enveloppe (2), dans laquelle l'élément de déformation (26, 260) peut être accouplé à l'unité d'enveloppe extérieure (1) par le biais d'une plaque dentée (28, 280), dans laquelle, pour l'accouplement de la plaque dentée (28, 280) à l'unité d'enveloppe (1), un élément d'arrêt (41) pourvu de dents est relié à l'unité d'enveloppe (1) et peut être amené en prise avec la plaque dentée (28, 280) par le biais d'un dispositif de serrage (11), afin d'accoupler la plaque dentée (28, 280) à l'unité d'enveloppe (1) à l'état serré en mode de conduite,
et l'élément d'arrêt (41) est amené hors de prise avec la plaque dentée (28) à l'état relâché du dispositif de serrage (11), dans laquelle l'unité d'enveloppe (1) comprend au moins un élément de limitation (34, 35, 40) pour la limitation du mouvement de la plaque dentée (28) dans la direction axiale (25) vers l'avant du véhicule, dans laquelle un côté frontal avant (30) de la plaque dentée (28) peut être amené en contact avec l'élément de limitation (34, 35, 40), **caractérisée en ce qu'**à l'état relâché du dispositif de serrage (11), lorsqu'en cas de collision le tube d'enveloppe (2) est poussé plus vers l'avant à cause de la force introduite dans l'arbre de direction et le côté frontal (30) de la plaque dentée (28) vient en contact avec l'élément de limitation (34, 35, 40), le dispositif d'absorption d'énergie (37) peut absorber une partie de l'énergie se produisant en cas de collision.

2. Colonne de direction selon la revendication 1, **caractérisée en ce que** l'élément de limitation est réalisé sous forme d'épaulement de butée (34, 35).

3. Colonne de direction selon la revendication 2, **caractérisée en ce que** l'épaulement de butée (34, 35) et l'unité d'enveloppe (1) sont configurés d'un seul tenant.

4. Colonne de direction selon la revendication 3, **caractérisée en ce que** l'épaulement de butée (34, 35) est formé d'un seul tenant dans l'unité d'enveloppe (1).

5. Colonne de direction selon l'une des revendications précédentes, **caractérisée en ce que** l'épaulement de butée (34) est configuré sous la forme de deux protubérances de l'unité d'enveloppe (1), lesquelles sont disposées de manière superposée transversalement à la direction axiale (25) et font saillie vers l'intérieur.

6. Colonne de direction selon l'une des revendications 2 à 4, **caractérisée en ce que** l'épaulement de butée (35) est configuré sous la forme d'une protubérance de l'unité d'enveloppe (1), laquelle protubérance s'étend transversalement à la direction axiale (25) et fait saillie vers l'intérieur.

7. Colonne de direction selon la revendication 1, **caractérisée en ce que** l'élément de limitation est réalisé sous forme de rampe de butée (40).

8. Colonne de direction selon la revendication 7, **caractérisée en ce que** la rampe de butée (40) et l'unité d'enveloppe (1) sont configurées d'un seul tenant.

9. Colonne de direction selon l'une des revendications précédentes, **caractérisée en ce que** l'élément de déformation est réalisé sous forme de bande de déformation (26), la plaque dentée (28) comportant un élément de freinage (27), lequel vient en prise autour de la bande de déformation (26).

10. Colonne de direction selon l'une des revendications 1 à 8, **caractérisée en ce que** l'élément de déformation est réalisé sous forme de fil flexible (260), la plaque dentée (28) étant accouplée au fil flexible (260).
